Europäisches Patentamt

European Patent Office

Office européen des brevets

(11) Publication number: **0 351 793**
**A2**

## (12) EUROPEAN PATENT APPLICATION

(21) Application number: **89113175.7**

(22) Date of filing: **18.07.89**

(51) Int. Cl.⁴: **B29D 22/00 , B29C 71/04**

(30) Priority: **19.07.88 IT 6767788**

(43) Date of publication of application:
**24.01.90 Bulletin 90/04**

(84) Designated Contracting States:
**AT BE DE ES FR GB NL SE**

(71) Applicant: **VALEO VISION S.p.A.**
**Via Asti, 89**
**I-10026 Santena(IT)**

(72) Inventor: **Amerio, Giorgio**
**Strada della Magra, 93**
**I-10156 Torino(IT)**

(74) Representative: **Jorio, Paolo et al**
**STUDIO TORTA Società Semplice Via Viotti 9**
**I-10121 Torino(IT)**

(54) **A process for the production of a headlamp reflector made of a synthetic thermoplastic polymer, and a headlamp reflector made by such a process.**

(57) A process for the production of a headlamp reflector comprising a first phase of producing the reflector structure by moulding a synthetic thermoplastic polymer, a second phase of surface treatment of this structure by exposure to ultra-violet radiation, and a third phase of painting the moulded and surface pre-treated structure.

Fig.3

EP 0 351 793 A2

# A PROCESS FOR THE PRODUCTION OF A HEADLAMP REFLECTOR MADE OF A SYNTHETIC THERMO-PLASTIC POLYMER, AND A HEADLAMP REFLECTOR MADE BY SUCH A PROCESS

The present invention relates to a process for the production of a headlamp reflector (in particular for land, air and water vehicles of any type and dimensions) made of a synthetic thermoplastic polymer.

As is known, headlamp reflectors, particularly for vehicles, can be made of sheet metal or, alternatively, in thermosetting plastics material, which is injection moulded into the required shape of the reflector, which is subsequently painted for the purpose of imparting the necessary reflectance characteristics, before final aluminising under vacuum. The process for the production of such thermosetting reflectors, which are currently preferred to those in sheet metal, is however rather expensive both because of the rather high percentage of rejects which occur at the end of the moulding phase, connected to the injection moulding characteristics of the thermosetting material, and also because of the burden of producing the associated production installations for such thermosetting articles. Reflectors of thermoplastics material are also known, but these unfortunately display a degeneration in the photometric characteristics in relation to temperature caused by the lamp.

The principal object of the present invention therefore that of providing a process for the production of a headlamp reflector made of a synthetic thermoplastic polymer which will overcome the above indicated disadvantages, that is to say which will have advantageous characteristics of production economy, whilst at the same time will be adapted to receive the application of a paint which has the necessary characteristics (covering power and reflectance) for headlamp reflectors, in particular for motor vehicles, so as to guarantee the constancy of the required photometric performance.

The said object is achieved by the present invention which relates to a process for the production of a headlamp reflector made of synthetic thermoplastic polymer, characterised by the fact that it comprises a first phase of producing the said reflector structure by means of moulding the said synthetic thermoplastic polymer, a second phase of surface treatment of the said structure by exposing it to ultra-violet radiation, and a third phase in which the said moulded and surface pre-treated structure is painted.

For a better understanding of the present invention there is now given a non-limitative description of an exemplary embodiment, with reference to the attached drawings, in which:

Figure 1 is a front view of a headlamp reflector formed according to the process of the present invention;

Figure 2 is a section view taken on the line II-II of the reflector of Figure 1; and

Figure 3 is a block schematic diagram of a system for production of the reflector according to the present invention.

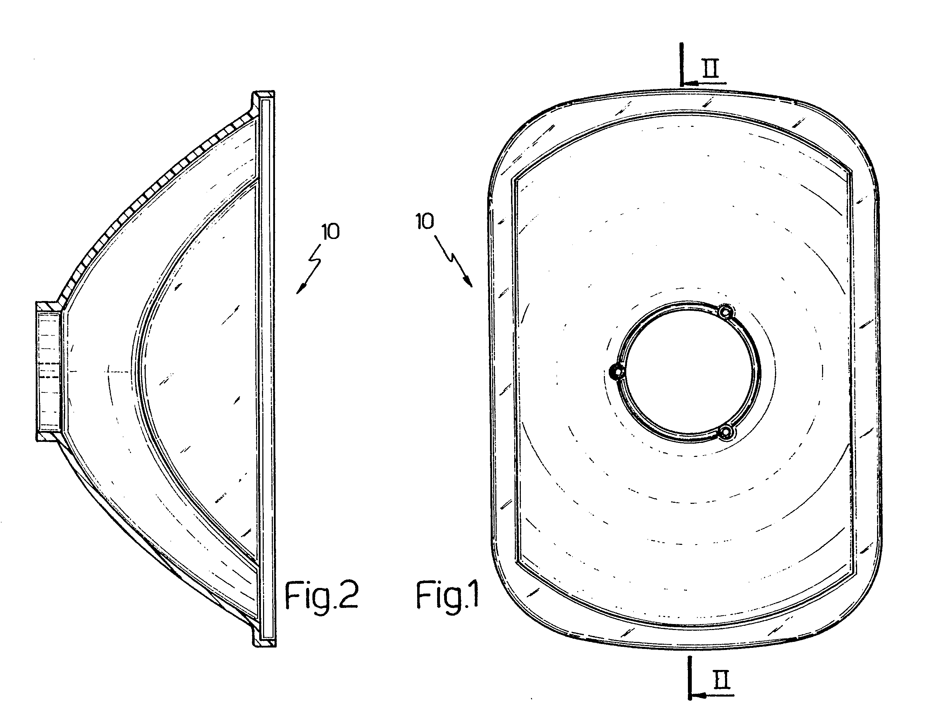

The process of the present invention starts from a base material constituted by a synthetic thermoplastic polymer, variously filled for example with glass fibres and/or mineral fillers, and produces by injection moulding the headlamp reflector having a conventional form with parabolic portions, one type of which is illustrated in Figures 1 and 2, indicated with the reference numeral 10, utilised for European motor vehicles. This base material can be constituted by polyphenylene sulphide, and can include a percentage of conductive material such as to confer on it a volume resistivity less than $10^8$ ohm.cm. according to the subject of Italian Patent application entitled "Thermoplastic Polymer based on Polyphenylene Sulphide" filed 8 March 1988 by the same applicant and the content of which is incorporated herein by reference as far as necessary; it is also obtained from a stock mixture comprising the basic polyphenylene sulphide having possible glass fibres and/or mineral fillers mixed with a maximum percentage (25%) of carbonaceous material (conveniently carbon black) by mixture with the polyphenylene sulphide itself in variable percentages according to the required volume resistivity in the final material, for the purpose of obtaining a good compromise between the requirements of electrostatic paintability and that of not excessively modifying the mechanical characteristics.

For the injection moulding of the reflector 10 there is conveniently utilised a press of the screw drive type for thermoplastic materials, with plasticising temperature control up to 400°C plus or minus 3°C, with parameters of injection speed, injection pressure, post pressure and counter pressure, controlled in a closed loop by servo-controlled valves with process control which provides for the automatic correction of the metering rate to compensate for possible variations in the density of the material during the plasticising stage, and with a closure unit of the mechanical "toggle" type with means for monitoring the mould clamping force and the stretch of each column. The mould comprises a matrix block and die in AISI 420 steel for resistance against the abrasive effect of the glass fibres and mineral filler, with the parabolic die being mirror polished to a roughness Ra = 0.04um with mould temperature maintenance by oil circulation with uniform temperature control on the surfaces of the walls obtained by positioning heating channels at a constant distance from the walls of the cavity: the high operating temperature in the mould requires the use of insulating plates of glass resin interposed between them and the planes of the press to avoid the transfer of heat introduced by the heating unit (plate with lambda = 0.23w/K°m). The air vents are formed by apertures of 5mm in width and a depth of from 0.01 to 0.02mm along the closure lines of the mould; the injection point is of the direct or fanned submerged type. The accessories comprise:

drying apparatus composed of a molecular sieve dehumidifier with heating of the dry air up to 170°C; insulating hopper in stainless steel of capacity sufficient for containing granules at a temperature of about 150°C for six hours;
a mould conditioning control unit with diathermic oil for regulating the temperature of the mould parts at a temperature between 130 and 170°C.

For production of a reflector 10 for european motor vehicles, such as that illustrated in Figures 1 and 2, there are defined the following technological parameters in the mould phase:

| | |
|---|---|
| closure force | 250 tonne |
| cylinder temperature | 324-326°C |
| injection pressure | 1150 bar |
| hold pressure | 800 bar |
| high pressure injection time | 1.8 sec |
| post pressure time | 10 sec |
| injection speed | medium |
| screw rotation velocity | 50 rev/m |
| mould temperature | 140°C |
| workpiece shaping time with mould closed | 27 sec |
| total cycle time | 48 sec |
| injection point | central with circular film (360°) |
| mould weight | 174 g |

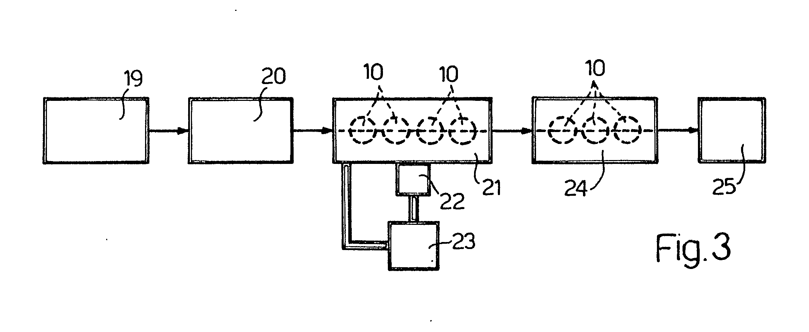

As can be seen in Figure 3, which is a block schematic diagram of the principles of the production cycle of headlamp reflectors according to the present invention, the reference numeral 19 indicates a mould station at which the headlamp 10 structures are formed, which are then transferred to a surface pre-treatment station 20 which has the purpose of increasing the surface wettability of this structure, reaching values of surface tension of several tens of dyne/cm up to a maximum of more than 70 dyne/cm to facilitate its subsequent painting; in particular, this surface pre-treatment is achieved by the exposure of the moulded structure of the headlamp 10 to ultra-violet radiation normally emitted from tube lamps of a power conveniently between 80 and 120 w/cm. The treatment time is a function of the degree of wettability which it is desired to obtain, and can vary from several seconds up to several tens of seconds. The radiation has a wavelength which can vary preferably between 200 and 400 nm, and preferably between 265 and 365 nm. Other factors which influence the degree of wettability obtained are: the angle of incidence of the radiation (optimum 90°) and the distance between the lamp and the surface to be treated.

The moulded and pre-treated structures of the headlamps 10 are conveyed through successive stations by a conveyor to a subsequent painting station, for example an electrostatic powder painting station 21 provided in a conventional manner with a powder distribution unit 22 and a powder recovery unit 23; downstream from the painting station 21 there is then a polymerisation oven 24, downstream from which there is finally a painted reflector 10 discharge station 25.

By way of example, there are provided data relating to the performance of this painting cycle for the reflector 10 of Figures 1 and 2 for which the technological mould parameters have already been indicated:

| | |
|---|---|
| conveyor speed | 7.8 m/min |
| feed pressure | 2.5 bar |
| voltage | 80-90 kv |
| gun-workpiece distance | 70 mm |
| paint thickness (after polymerisation) | 110-130 um |
| firing | 20 min at 240°C |

The paints utilised must have a high covering capacity (which translates into a high degree of loss of surface irregularities on the painted surface) and reflectance (which translates into a high coefficient of reflectivity of the painted surface) as well as the usual characteristics required of a paint such as an optimum adherence to the support; the headlamp reflectors thus painted therefore have the necessary reflectance to be able to effect the subsequent vacuum aluminising which would otherwise be matt.

The advantages obtained with the process of the present invention described hereinabove are evident in that it allows a headlamp reflector to be obtained by injection moulding of a synthetic thermoplastic polymer, conveniently based on polyphenylene sulphide, and subsequently painted after a surface pre-treatment by exposure to ultra-violet radiation, which allows the wettability of the workpiece to be brought to the necessary value for it to become perfectly paintable; in this way the fundamental characteristics of good ease of moulding of synthetic thermoplastic materials and high resistance to heat (particularly of polyphenylene sulphide) are exploited so that such reflectors can be produced at relatively low cost and with highly efficient photometric characteristics.

Finally it is clear that various modifications and variations can be introduced to those specified without departing from the ambit of the inventive idea contained herein. For example the shape of this reflector can be variously formed according to a predetermined mathematical formula for representation of the reflecting surface. Thus also the paint could be applied as a liquid rather than as a powder; and downstream from the paint station, before the polymerisation oven there could be a drying oven.

## Claims

1. A process for the production of a headlamp reflector made of a synthetic thermoplastic polymer, characterised by the fact that it comprises a first phase of production of the structure (10) of the reflector by moulding the said synthetic thermoplastic polymer, a second phase of surface treatment of the said structure by exposure to ultra-violet radiation, and a third phase of painting the said moulded and surface pre-treated structure (10).

2. A process according to Claim 1, characterised by the fact that the said ultra-violet radiation has a wavelength lying between 200 and 400 nm.

3. A process according to Claim 1 or Claim 2, characterised by the fact that at the end of the said second phase the said structure reaches values of surface tension up to a maximum of more than 70 dyne/cm.

4. A process according to any preceding Claim, characterised by the fact that the said thermoplastic polymer is based on polyphenylene sulphide.

5. A process according to any preceding Claim, characterised by the fact that the said polymer includes glass fibre and/or mineral fillers.

6. A process according to any preceding Claim, characterised by the fact that the said thermoplastic polymer includes a percentage of conductive material such as to confer on it a volume resistivity less than $10^8$ ohm.cm., and in that the said painting is an electrostatic painting.

7. A process according to any preceding Claim, characterised by the fact that the said moulding in the said first phase is an injection moulding.

8. A process according to any preceding Claim, characterised by the fact that after the said third phase follows a fourth phase of polymerisation of the said paint.

9. A headlamp reflector, characterised by the fact that it is obtained with a process according to any preceding Claim.

10. A reflector according to Claim 9, characterised by the fact that it is a reflector for land, air or water vehicles.

Fig.2

Fig.1

10

10

EP 0 351 793 A2

Fig.3

EP 0 351 793 A2